# EUROPÄISCHE PATENTSCHRIFT

(11) **EP 0 974 393 B1**
(45) Veröffentlichungstag und Bekanntmachung des Hinweises auf die Patenterteilung: **18.08.2004**
(21) Anmeldenummer: 99111458.8
(22) Anmeldetag: 12.06.1999
(51) Int. Cl.: B01J 8/04, H01M 8/06, C01B 3/32, C01B 3/48

(54) **Reformierungsreaktor mit katalytischer Brennereinheit**
Reforming reactor with catalytic burner unit
Réacteur de reformage avec brûleur catalytique

(30) Priorität: 18.07.1998 DE 19832386
(43) Veröffentlichungstag der Anmeldung: 26.01.2000
(73) Patentinhaber: Ballard Power Systems AG, 73230 Kirchheim / Teck-Nabern (DE)
(72) Erfinder: Boneberg, Stefan, 89134 Blaustein (DE); Brauchle, Stefan, 88400 Biberach/Riss (DE)
(74) Vertreter: Beyer, Andreas, Dr.

(56) Entgegenhaltungen:
- EP-A- 0 600 621
- EP-A- 0 887 307
- DE-A- 2 942 359
- DE-A- 4 330 623
- US-A- 5 071 627

## Beschreibung

Die vorliegende Erfindung bezieht sich auf einen Reformierungsreaktor nach dem Oberbegriff des Anspruchs 1. Der Reaktor beinhaltet eine Reformerstufe zur Umsetzung eines Ausgangsstoffgemischs in ein Reformatprodukt, eine CO-Shiftstufe zur Verringerung der CO-Konzentration im Reformatprodukt und eine katalytische Brennereinheit, die mit einem Heizbereich mit der Reformerstufe und mit einem dem Heizbereich vorgeschaltetem Kühlbereich mit der CO-Shiftstufe in Wärmekontakt steht. Im Kühlbereich weist die Brennereinheit eine gegenüber dem Heizbereich geringere Brennerkatalysatoraktivität auf. Vorzugsweise ist die Brennerkatalysatoraktivität im Kühlbereich gleich null, z.B. dadurch, daß nur der Heizbereich mit entsprechendem Verbrennungskatalysatormaterial belegt ist, während der Kühlbereich katalysatorfrei bleibt. Derartige Reaktoren eignen sich beispielsweise zur Wasserdampfreformierung von Methanol in einem Brennstoffzellenfahrzeug, um den zum Betrieb der Brennstoffzellen benötigten Wasserstoff aus flüssig mitgeführtem Methanol an Bord zu erzeugen.

In der Patentschrift EP 0 529 329 B1 ist ein Reformierungsreaktor dieser Art in Plattenstapelbauweise offenbart, der insbesondere zur endothermen Reformierung von Stadtgas dient, um das entstehende, wasserstoffreiche Reformatgas einem stationären Phosphorsäure-Brennstoffzellensystem zuzuführen, wie es in Hotels, Appartements und Krankenhäusern Verwendung findet. Zwischen Reformerstufe und CO-Shiftstufe ist bei diesem Reaktor eine Wärmeübertragerstufe vorgesehen, in welcher das aus der Reformerstufe austretende Reformatgas vor Eintritt in die CO-Shiftstufe unter Abkühlung das der Reformerstufe zugeführte Stadtgas erwärmt. In der Reformerstufe steht eine mit Reformierungskatalysatormaterial belegte Reformerschicht mit einer mit Verbrennungskatalysatormaterial belegten Heizschicht der Brennereinheit in Wärmekontakt. Dieser Heizschicht wird Luft zugeführt, die zuvor durch eine erste katalysatorfreie Kühlschicht der CO-Shiftstufe hindurchgeleitet wird. Als Brennstoff für die katalytische Brennereinheit dient das Anodenaustrittsgas des Brennstoffzellensystems, wobei dieses Gas hierzu zunächst durch eine zweite Kühlschicht der CO-Shiftstufe hindurchgeleitet und von dort in eine Brennstoffzufuhrschicht der Reformerstufe eingespeist wird. Die Brennstoffzufuhrschicht steht mit der Heizschicht über eine gelochte Platte in Verbindung, durch deren Öffnungen der Brennstoff gleichmäßig verteilt in die Heizschicht gelangt und dort mit der Luft verbrannt wird, die im Gleichstrom zu dem durch die Reformerschicht hindurchgeleiteten Stadtgas durch die Heizschicht strömt. In der CO-Shiftstufe steht eine mit geeignetem CO-Shiftkatalysatormaterial belegte CO-Umwandlungsschicht, in welcher die exotherme CO-Shiftreaktion stattfindet, mit den auf beiden Seiten angrenzenden Kühlschichten in Wärmekontakt, durch welche die Luft und das zu verbrennende Brennstoffzellen-Anodenaustrittsgas voneinander getrennt als Kühlstrom mit jeweils zickzackförmiger Strömungszuführung in Wärmekontakt zum durch die CO-Umwandlungsschicht strömende Reformatgas hindurchgeleitet werden.

Bei einem weiteren Reformierungsreaktor, wie er in der Offenlegungsschrift EP 0 199 878 A2 offenbart ist, ist eine rohrförmige katalytische Brennereinheit vorgesehen, die ringförmig von einer Reformerstufe umgeben ist, welche an einem axialen Endbereich in eine CO-Shiftstufe übergeht.

Aus dem US-Patent US 5,071,627 ist ein Reaktorsystem zum Durchführen einer chemischen Umwandlung bekannt, bei welchem zwei Reaktoren in benachbarter Lage zueinander angeordnet sind. Die beiden Reaktoren werden an entgegengesetzten Seiten mit Reaktionsausgangsstoffen beschickt. Diese Reaktionsausgangsstoffe durchströmen die Reaktoren gegenläufig, wobei sie während des Durchströmens durch die Reaktoren miteinander reagieren. Dabei wird Wärme frei, die zu einer Wärmeverteilung in dem jeweiligen Reaktor führt und zwar derart, dass am Eintrittsbereich der Reaktor eine verhältnismäßig geringe Temperatur aufweist und mit zunehmendem Strömungsweg der Reaktionsausgangsstoffe zunehmend erwärmt wird. Durch die gegenläufige Durchströmung der beiden Reaktoren kann erreicht werden, dass Wärme aus den stark erwärmten Reaktorbereichen, insbesondere am Austrittsende des jeweiligen Reaktors, auf den verhältnismäßig kühlen Eintrittsbereich des jeweils anderen Reaktors abgeleitet werden kann und damit dieser vorgewärmt werden kann.

Der Erfindung liegt als technisches Problem die Bereitstellung eines Reformierungsreaktors der eingangs genannten Art zugrunde, der sich kompakt bauen lässt, ein ausreichend CO-armes Reformatprodukt liefert und sich insbesondere auch für mobile Anwendungen, wie z.B. in einem Brennstoffzellenfahrzeug, eignet.

Die Erfindung löst dieses Problem durch die Bereitstellung eines Reformierungsreaktors mit den Merkmalen des Anspruchs 1. Bei diesem Reaktor wird das Brenngas, d.h. das brennbare Gasgemisch für die katalytische Brennereinheit, im Gegenstrom zu dem die CO-Shiftstufe durchströmenden Reformatprodukt, und zwar in Wärmekontakt über wenigstens die halbe Strömungsweglänge der CO-Shiftstufe und/oder über wenigstens einen austrittsseitigen Teil derselben, und zu dem die Reformerstufe durchströmenden Ausgangsstoffgemisch durch den Kühlbereich und den anschließenden Heizbereich der katalytischen Brennereinheit hindurchgeleitet. Zur Ausübung der Heizfunktion ist der Heizbereich mit einem Verbrennungskatalysatormaterial belegt, mit dem eine ausreichende Brennerkatalysatoraktivität bereitgestellt wird. Demgegenüber ist der Kühlbereich mit geringerer Brennerkatalysatoraktivität ausgelegt, wobei er z.B. völlig ohne Katalysatorbelegung realisiert sein kann, so dass dann in diesem Bereich noch keine Verbrennungswärme erzeugt wird.

Diese Brenngasführung nach dem Gegenstromprinzip ermöglicht eine vergleichsweise effektive Kühlung der CO-Shiftstufe, was einen kompakten Aufbau derselben und damit des Reaktors insgesamt erlaubt, wozu des weiteren beiträgt, dass das Brenngas als einheitlicher Kühlstrom, d.h. der Brennstoff und das sauerstoffhaltige Gas in bereits gemischter Form, durch die CO-Shiftstufe geführt wird. Die Gegenströmung des Brenngases in dem mit der Reformerstufe in Wärmekontakt stehenden Heizbereich ist für das Kaltstartverhalten vorteilhaft, da die Eingangsseite der Reformerstufe dadurch beim Starten am stärksten beheizt wird und auf diese Weise schnell die für die Reformierungsreaktion nötige Betriebstemperatur erreicht. Eine hohe Betriebstemperatur in der Reformerstufe ist wünschenswert, um selbige mit hoher Belastung betreiben und damit bei gegebener, kompakter Bauform einen hohen Reformierungsumsatz erzielen zu können. Die Reformerstufenausgangsseite, die aufgrund des Gegenstromprinzips mit der Eintrittsseite des Heizbereichs in Wärmekontakt steht, wird entsprechend weniger stark beheizt. Damit wird dort eine - erwünschte Temperaturabnahme im Übergangsbereich zur CO-Shiftstufe eingeleitet, mit der das Shiftgasgleichgewicht im Reformatprodukt zugunsten eines niedrigen CO-Anteils verschoben wird. Spätestens am Austritt der CO-Shiftstufe kann dadurch die CO-Konzentration im Reformatprodukt auf einen ausreichend niedrigen Wert gebracht werden, wobei die CO-Shiftreaktion gleichzeitig die Wasserstoffausbeute und damit den Gesamtwirkungsgrad des Reaktors erhöht. Da somit die CO-Konzentration am Ausgang der CO-Shiftstufe bereits relativ gering ist, braucht eine bei Bedarf nachgeschaltete Gasreinigungsstufe zur weiteren CO-Minderung, wie z.B. eine CO-Oxidationsstufe, kein besonders hohes Leistungsvermögen zu besitzen und läßt sich daher ebenfalls kompakt bauen.

Ein nach Anspruch 2 weitergebildeter Reformierungsreaktor erlaubt einen besonders kompakten Systemaufbau, indem die Reformerstufe und CO-Shiftstufe in einen gemeinsamen Reaktionsraum integriert sind, wobei dieser mit einem stromaufwärtigen Teil mit dem Heizbereich und mit einem stromabwärtigen Teil mit dem Kühlbereich der katalytischen Brennereinheit in Wärmekontakt steht, so daß der stromaufwärtige, beheizte Reaktionsraumteil die Reformerstufe und der stromabwärtige, gekühlte Reaktionsraumteil die CO-Shiftstufe bildet. Es versteht sich, daß bei dieser integralen Bauweise die Reformierungsfunktion der Reformerstufe stufenlos in die CO-Minderungsfunktion der CO-Shiftstufe übergehen kann.

Bei einem nach Anspruch 3 weitergebildeten Reformierungsreaktor sind der Kühlbereich und der Heizbereich der katalytischen Brennereinheit in einen gemeinsamen Brennraum integriert. Eine Kombination mit einer Integration von Reformerstufe und CO-Shiftstufe in einem gemeinsamen Reaktionsraum gemäß Anspruch 2 ermöglicht eine besonders kompakte Reaktorbauform.

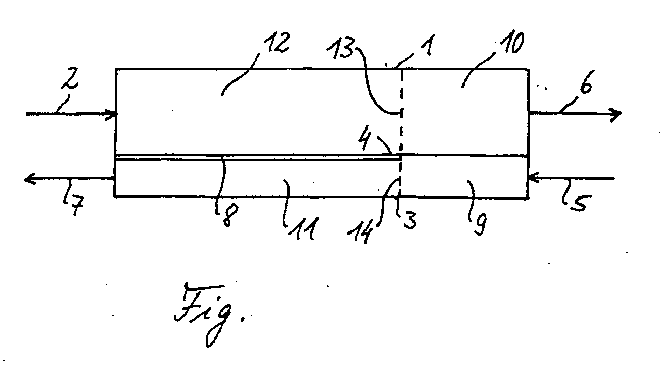

Eine vorteilhafte Ausführungsform der Erfindung ist in der Zeichnung dargestellt und wird nachfolgend beschrieben.

Die einzige Figur zeigt eine schematische Längsschnittansichtdurch einen Reformierungsreaktor.

Der gezeigte Reformierungsreaktor beinhaltet einen Reaktionsraum 1, der in nicht näher gezeigter Weise mit einem Katalysatormaterial belegt ist, das die beabsichtigte Reformierungsreaktion eines Ausgangsstoffgemischs 2 in ein Reformatprodukt katalysiert und zudem als CO-Shiftkatalysator geeignet ist. Der Reaktor kann insbesondere in mobilen Anwendungen, wie in Brennstoffzellenfahrzeugen, zur Wasserdampfreformierung von Methanol eingesetzt werden, wobei dann als Ausgangsstoffgemisch 2 ein Methanol/Wasserdampf-Gemisch in den Reaktionsraum 1 eingeleitet wird. Geeignete Katalysatormaterialien für die gleichzeitige, temperaturabhängige Katalysierung der Reformierungsreaktion von Methanol und der CO-Shiftreaktion sind an sich bekannt und werden z.B. in Form einer Pelletschüttung oder einer Innenwandbeschichtung in den Reaktionsraum 1 eingebracht.

Der Reaktionsraum 1 steht mit einem Brennraum 3 einer katalytischen Brennereinheit über eine Trennwand 4 in flächigem Wärmekontakt. Dem Brennraum 3 wird ein katalytisch zu verbrennendes Brenngas 5 im Gegenstrom zu dem in den Reaktionsraum 1 eingespeisten Ausgangsstoffgemisch 2 zugeführt, d.h. das Brenngas 5 tritt auf derjenigen Seite in den Brennraum 3 ein, auf welcher das durch die Reformierungsreaktion erzeugte Reformatprodukt 6 aus dem Reaktionsraum 1 austritt, während die Verbrennungsgase 7 den Brennraum 3 auf der gegenüberliegenden Seite verlassen, an welcher das Ausgangsstoffgemisch 2 dem Reaktionsraum 1 zugeführt wird. Der Brennraum 3 ist nur in einem stromabwärtigen Teil 11 mit einem geeigneten Verbrennungskatalysatormaterial 8 in Form einer Wandbeschichtung auf der entsprechenden Seite der Trennwand 4 belegt, während der übrige, stromaufwärtige Teil 9 des Brennraums 3 frei von Katalysatormaterial ist. Da somit in diesem stromaufwärtigen Teil 9 des Brennraums 3 keine Verbrennung stattfindet, bildet dieser einen Kühlbereich, durch den das Brenngas 5 als Kühlstrom für den angrenzenden Teil 10 des Reaktionsraums 1 hindurchströmt. Hingegen bildet der stromabwärtige Teil 11 des Brennraums 3 einen Heizbereich, in welchem das zugeführte Brenngas unter der Wirkung des Verbrennungskatalysators 8 verbrannt wird. Die im Heizbereich 11 dadurch erzeugte Verbrennungswärme heizt den angrenzenden, stromaufwärtigen Teil des Reaktionsraums 12.

Die Systemauslegung ist nun so gewählt, daß der stromaufwärtige Teil 12 des Reaktionsraums 1 eine Reformerstufe bildet, die vom Heizbereich 11 der katalytischen Brennereinheit auf eine zur Durchführung der Reformierungsreaktion optimale, höhere Temperatur aufgeheizt wird, während der anschließende, stromabwärtige Teil 10 des Reaktionsraums 1 eine CO-Shiftstufe bildet, die durch den Kühlbereich 9 der Brennereinheit auf einer niedrigeren Temperatur als die Reformerstufe 12 gehalten wird. Die niedrigere Temperatur verschiebt das Gleichgewicht der CO-Shiftreaktion zu ungunsten von Kohlenmonoxid, so daß in der CO-Shiftstufe 10 der CO-Anteil im gebildeten Reformatprodukt verringert wird und gleichzeitig der Reformierungsumsatz vervollständigt werden kann, soweit noch nicht umgesetztes Ausgangsstoffgemisch in die CO-Shiftstufe 10 gelangt. Das Reformatprodukt 6 verläßt somit die CO-Shiftstufe 10 und damit den Reaktionsraum 1 mit hohem Wasserstoffanteil und ausreichend geringer CO-Konzentration. Durch die Verschiebung des Shiftgasgleichgewichtes erhöht sich zudem die Wasserstoffausbeute, was dem Wirkungsgrad des gesamten Reaktors zugute kommt. Im Fall der Wasserdampfreformierung von Methanol kann das im wesentlichen aus Wasserstoff bestehende Reformatprodukt 6 dem Anodenteil eines Brennstoffzellensystems als Brennstoff zugeführt werden, wobei es zuvor nach Bedarf einer weiteren Gasreinigung zur CO-Reduzierung unterzogen wird, z.B. durch eine CO-Oxidationsstufe oder eine selektive Wasserstoffabtrennstufe. Vorzugsweise kann auch die Brennereinheit selbst als CO-Oxidationsstufe ausgeführt werden, wobei in diesem Fall das Reformatprodukt vor dem Eintritt in das Brennstoffzellensystem der Brennereinheit zur CO-Reduzierung zugeführt wird.

Ersichtlich besitzt der gezeigte Reformierungsreaktor eine sehr kompakte Bauform, die bei gegebenem, gefordertem Leistungsvermögen wenig Einbauraum benötigt und mit geringem Gewicht realisierbar ist, so daß er sich besonders gut für mobile Anwendungen eignet. Reformerstufe 12 und nachgeschaltete CO-Shiftstufe 10 sind in einem gemeinsamen Reaktionsraum 1 integriert, wobei sich je nach Systemauslegung ein mehr oder weniger breiter, in der Figur gestrichelt symbolisierter Übergangsbereich 13 ergibt, in welchem in Gasströmungsrichtung die Reformierungsaktivität abnimmt und die CO-Shiftumwandlungsaktivität zunimmt. Dieser Übergangsbereich 13 wird durch den ebenfalls gestrichelt markierten Übergangsbereich 14 zwischen katalysatorfreiem Kühlbereich 9 und katalysatorbelegtem Heizbereich 11 des Brennraums 3 definiert. Lage und Breite des Übergangsbereichs 13 zwischen Reformerstufe 12 und CO-Shiftstufe 10 können somit je nach Anforderung durch entsprechende Auslegung des Brennraum-Kühlbereichs 9 und dessen Übergangs 14 zum Heizbereich 11 in gewünschter Weise eingestellt werden. Alternativ zur gezeigten, völligen Katalysatorfreiheit des Kühlbereichs 9 ist es hierbei möglich, diesen ebenfalls mit Verbrennungskatalysatormaterial zu belegen, jedoch schwächer als den anschließenden Heizbereich 11. Dabei kann die geringe Verbrennungskatalysatorbelegung im Kühlbereich 9 gleichmäßig oder auch inhomogen so gewählt werden, daß die Verbrennungskatalysatoraktivität zum Heizbereich 11 hin stetig zunimmt.

Das für den Reaktor gewählte Gegenstromprinzip von Brenngasströmung 5 einerseits und zu reformierendem Ausgangsstoffgemisch 2 andererseits ist zudem für das Kaltstartverhalten vorteilhaft. Denn nach dem Kaltstart erwärmt sich der austrittsseitige Teil des Brennraums 3 am schnellsten, da dieser Teil zusätzlich vom stromaufwärts entstandenen, heißen Verbrennungsabgas 7 aufgeheizt wird, so daß dementsprechend der eintrittsseitige Teil der Reformerstufe 12 sehr schnell die zur Durchführung der Reformierungsreaktion erforderliche Betriebstemperatur erreicht und dort rasch der Reformierungsprozeß einsetzt.

Es versteht sich, daß neben dem oben beschriebenen Beispiel weitere Realisierungen des erfindungsgemäßen Reformierungsreaktors möglich sind. So können Reformerstufe und CO-Shiftstufe unterschiedliche Katalysatormaterialien enthalten. Außerdem können statt der gezeigten integrierten Systemauslegung die Reaktionsräume der Reformerstufe einerseits und der CO-Shiftstufe andererseits räumlich voneinander getrennt und über eine Verbindungsleitung verbunden sein. In gleicher Weise können dem Kühlbereich einerseits und dem Heizbereich der katalytischen Brennereinheit andererseits räumlich getrennte, über eine Verbindungsleitung verbundene Wärmeübertragerräume zugeordnet sein. Weiter versteht sich, daß der Reaktor neben der gezeigten plattenförmigen Bauart von jeder anderen herkömmlichen Bauart sein kann, insbesondere auch vom Rohrbündeltyp oder von zylindrischem Aufbau. In allen Fällen wird eine Gegenstromführung des Brenngases relativ zum zu reformierenden Ausgangsstoffgemisch mit den genannten Vorteilen insbesondere auch hinsichtlich Erzielung einer kompakten Reaktorbauform beibehalten.

## Patentansprüche

1. Reformierungsreaktor, insbesondere zur Wasserdampfreformierung von Methanol in einem Brennstoffzellenfahrzeug, mit
- einer Reformerstufe (12) zur Umsetzung eines Ausgangsstoffgemischs (2) in ein Reformatprodukt mittels einer endothermen Reformierungsreaktion,
- einer CO-Shiftstufe (10) zur Umwandlung von im Reformatprodukt enthaltenem Kohlenmonoxid in Kohlendioxid über eine CO-Shiftreaktion und
- einer katalytischen Brennereinheit (3, 8, 9, 11) zur Wärmeerzeugung durch katalytische Verbrennung eines Brenngases (5), wobei die Brennereinheit einen mit der Reformerstufe in Wärmekontakt stehenden Heizbereich (11) und einen dem Heizbereich vorgeschalteten Kühlbereich (9) mit gegenüber dem Heizbereich geringerer Verbrennungskatolysatoraktivität aufweist, und wobei der Kühlbereich (9) mit der CO-Shiftstufe (10) in Wärmekontakt steht,
**gekennzeichnet durch**
- Mittel zum Hindurchleiten des Brenngases (5) **durch** den Kühlbereich (9) und den anschließenden Heizbereich (11) jeweils im Gegenstrom zu dem die CO-Shiftstufe (10) durchströmenden Reformatprodukt und zu dem die Reformerstufe (12) durchströmenden Ausgangsstoffgemisch.

2. Reformierungsreaktor nach Anspruch 1,
**dadurch gekennzeichnet,**
**daß** die Reformerstufe (12) einen stromaufwärtigen Teil eines Reaktionsraums (1) bildet, in den die CO-Shiftstufe (10) als stromabwärtiger Teil desselben integriert ist.

3. Reformierungsreaktor nach Anspruch 1 oder 2,
**dadurch gekennzeichnet, daß** der Kühlbereich (9) einen stromaufwärtigen Teil und der Heizbereich (11) einen stromabwärtigen Teil eines durchgehenden Brennraums (3) der katalytischen Brennereinheit bilden.

4. Reformierungsreaktor nach Anspruch 1,
**dadurch gekennzeichnet,**
**daß** die katalytische Brennereinheit (3, 8, 9, 11) als Stufe zur selektiven CO-Oxidation des Reformatproduktes ausgebildet ist.

5. Reformierungsreaktor nach Anspruch 1,
**dadurch gekennzeichnet,**
**daß** der Kühlbereich (9) mit der CO-Shiftstufe (10) über wenigstens die halbe Strömungsweglänge der CO-Shiftstufe (10) und/oder über wenigstens einen austrittsseitigen Teil der CO-Shiftstufe (10) in Wärmekontakt steht.

## Claims

1. Reforming reactor, in particular for steam reforming methanol in a fuel cell vehicle, comprising:
- a reforming stage (12) for converting a starting material mixture (2) into a reformate by means of an endothermic reforming reaction,
- a CO shift stage (10) for converting carbon monoxide contained in the reformate into carbon dioxide by means of a CO shift reaction, and
- a catalytic burner unit (3, 8, 9, 11) for generating heat by catalytic combustion of a fuel gas (5),
wherein the burner unit comprises a heating zone (11) being in heat contact with the reforming stage and a cooling zone (9) being arranged upstream of the heating zone and having a lower combustion catalyst activity as compared to the heating zone, and wherein the cooling zone (9) is in heat contact with the CO shift stage (10),
**characterized by**
- means for conducting the fuel gas (5) through the cooling zone (9) and the adjacent heating zone (11) in counter-current to the reformate flowing through the CO shift stage (10) and the starting material mixture flowing though the reforming stage (12), respectively.

2. Reforming reactor according to claim 1,
**characterized in that** the reforming stage (12) constitutes an upstream part of a reaction chamber (1), into which the CO shift stage (10) is integrated as the downstream part thereof.

3. Reforming reactor according to claims 1 or 2,
**characterized in that** the cooling zone (9) constitutes an upstream part and the heating zone (11) constitutes a downstream part of a continuous combustion chamber (3) of the catalytic burner unit.

4. Reforming reactor according to claim 1,
**characterized in that** the catalytic burner unit (3, 8, 9, 11) is designed as a stage for selective CO oxidation of the reformate.

5. Reforming reactor according to claim 1,
**characterized in that** the cooling zone (9) is in heat contact with the CO shift stage (10) via at least half of the flow path length of the CO shift stage (10) and/or via at least one outlet-side part of the CO shift stage (10).

## Revendications

1. Réacteur de reformage, destiné en particulier au reformage à la vapeur d'eau de méthanol dans un véhicule à pile à combustible, comprenant
- un étage de reformage (12) pour la conversion d'un mélange de départ (2) en un produit de reformat à l'aide d'une réaction de reformage endothermique,
- un étage de conversion de CO (10) pour la transformation du monoxyde de carbone contenu dans le produit de reformat en dioxyde de carbone à l'aide d'une réaction de conversion de CO, et
- une unité de combustion catalytique (3, 8, 9, 11) pour la production de chaleur par combustion catalytique d'un gaz combustible (5),
ladite unité de combustion présentant une zone de chauffage (11) en contact thermique avec l'étage de reformage et une zone de refroidissement (9) placée en amont de ladite zone de chauffage et dotée d'une activité catalytique plus faible par rapport à la zone de chauffage, et la zone de refroidissement (9) étant en contact thermique avec l'étage de conversion de CO (10),
**caractérisé par**
- des moyens permettant la circulation du gaz combustible (5) au travers de la zone de refroidissement (9) et de la zone de chauffage (11) placée à la suite de cette dernière, à contre-courant du produit de reformat traversant l'étage de conversion de CO (10) et du mélange de départ traversant l'étage de reformage (12).

2. Réacteur de reformage selon la revendication 1,
**caractérisé en ce que** l'étage de reformage (12) forme une partie amont d'un compartiment de réaction (1) dans lequel est intégré l'étage de conversion de CO (10) sous forme de partie aval dudit compartiment de réaction.

3. Réacteur de reformage selon la revendication 1 ou 2,
**caractérisé en ce que** la zone de refroidissement (9) forme une partie amont et la zone de chauffage (11) une partie aval d'un espace de combustion (3) continu à l'intérieur de l'unité de combustion catalytique.

4. Réacteur de reformage selon la revendication 1,
**caractérisé en ce que** l'unité de combustion catalytique (3, 8, 9, 11) est conçue de manière à former un étage pour l'oxydation sélective du CO contenu dans le produit de reformat.

5. Réacteur de reformage selon la revendication 1,
**caractérisé en ce que** la zone de refroidissement (9) est en contact thermique avec l'étage de conversion de CO (10) sur au moins la moitié de la longueur du chemin d'écoulement de l'étage de conversion de CO (10) et/ou sur au moins une partie de l'étage de conversion de CO (10) située en sortie dudit étage de conversion.
